(19) Europäisches Patentamt
European Patent Office
Office européen des brevets

(11) **EP 2 259 105 B1**

(12) **EUROPEAN PATENT SPECIFICATION**

(45) Date of publication and mention
of the grant of the patent:
**25.08.2021 Bulletin 2021/34**

(51) Int Cl.:
*G02B 6/028* (2006.01)     *G02B 6/036* (2006.01)

(21) Application number: **10164095.1**

(22) Date of filing: **27.05.2010**

(54) **VERY BROAD BANDWIDTH MULTIMODE OPTICAL FIBRE WITH AN OPTIMIZED CORE-CLADDING INTERFACE AND REDUCED CLADDING EFFECT**

MULTIMODE-LICHTWELLENLEITER MIT SEHR HOHER BANDBREITE BESTEHEND AUS EINER OPTIMIERTEN KERN-MANTEL SCHNITTSTELLE UND EINEM REDUZIERTEN MANTEL-EINFLUSS.

FIBRE OPTIQUE MULTIMODE À TRÈS LARGE BANDE PASSANTE AVEC UNE INTERFACE COEUR-GAINE OPTIMISÉE ET EFFET DE GAINE RÉDUIT

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **05.06.2009 FR 0902724**
**09.06.2009 US 185462 P**

(43) Date of publication of application:
**08.12.2010 Bulletin 2010/49**

(73) Proprietor: **Draka Comteq B.V.**
**2627 AN Delft (NL)**

(72) Inventors:
• **MOLIN, Denis**
**91210 Draveil (FR)**
• **DE JONGH, Koen**
**5694 SB, Son en Breugel (NL)**
• **SILLARD, Pierre**
**78150, Le Chesnay (FR)**
• **LUMINEAU, Yves**
**95220, Herblay (FR)**

(74) Representative: **Algemeen Octrooi- en Merkenbureau B.V.**
**P.O. Box 645**
**5600 AP Eindhoven (NL)**

(56) References cited:
**WO-A-2006/010798     WO-A-2009/054715**
**GB-A- 2 027 224     US-A- 4 184 744**
**US-A- 5 115 486     US-A1- 2008 166 094**

**EP 2 259 105 B1**

**Description**

The present invention relates to the field of transmission by optical fibres, and more specifically, to a multimode optical fibre for high-bandwidth applications.

An optical fibre is conventionally composed of an optical core having the function of transmitting and optionally amplifying an optical signal, and an optical cladding having the function of confining the optical signal within the optical core. To this end, the refractive indices of the core $n_c$ and of the cladding $n_g$ are such that $n_c > n_g$.

The refractive index profile denotes the graph of the function which associates the refractive index with the radius of the fibre. The distance to the centre of the fibre is conventionally shown on the x-axis, and the difference between the refractive index at that specific distance and the refractive index of the fibre cladding on the y-axis. Generally, the refractive index profile is qualified according to its appearance. Thus the refractive index profile is described in terms of a "step", "trapezium", "triangle", or "alpha" for graphs which have step, trapezium, triangle, or graded shapes respectively. These curves are representative of the theoretical or set profile of the fibre, while the manufacturing constraints of the fibre may result in a slightly different profile.

Two main types of optical fibres exist, viz. multimode fibres and single mode fibres. In a multimode fibre, for a given wavelength, several optical modes are propagated simultaneously along the fibre, whereas in a single mode fibre the modes of a higher order are strongly attenuated. The typical diameter of a single mode or multimode optical fibre is 125 $\mu$m. The core of a multimode fibre typically has a diameter of 50 $\mu$m or 62.5 $\mu$m, whereas the core of a single-mode fibre generally has a diameter of approximately 6 $\mu$m to 9 $\mu$m. The multimode systems are less expensive than the single mode systems, since the sources, the connectors, and maintenance, have a lower cost.

Multimode fibres are commonly used for short-distance applications, such as local networks or LAN (local area network), requiring a broad bandwidth. Multimode fibres have been the subject of an international standardization under the ITU-T G.651.1 standard which defines the particular criteria of the bandwidth, the numerical aperture (defined as the square root of the difference between the squared maximum refractive index of the core index profile, and the squared refractive index of the cladding), and the core diameter, for the purpose of compatibility between fibres. In addition, the OM3 standard has been adopted in order to satisfy high-bandwidth applications (i.e. a data rate higher than 1GbE) over long distances (i.e. a distance of higher than 300 m). With the development of high-bandwidth applications the average core diameter for multimode fibres has been reduced from 62.5 $\mu$m to 50 $\mu$m.

A fibre must have the broadest possible bandwidth for it to be useable in a high-bandwidth application. The bandwidth of a fiber is characterized for a given wavelength in several different ways, which will be explained hereafter. A distinction is made between the bandwidth in the so-called OFL or "overfilled launch" condition, and the so-called EMB or "Effective Modal Bandwidth" condition. The acquisition of the OFL bandwidth assumes the use of a light source exhibiting uniform excitation over the entire radial surface of the fibre, for example a laser diode or LED (Light Emitting Diode). However, recently developed light sources used in high-bandwidth applications, such as VCSELs (Vertical Cavity Surface Emitting Lasers), exhibit an inhomogeneous excitation over the radial surface of the fibre. For this type of light source, the OFL bandwidth is less suitable and it is preferable in this case to use the effective modal bandwidth or EMB condition. The calculated effective bandwidth or EMBc, estimates the minimum EMB of a multimode fibre independent of the type of VCSEL used. The EMBc is obtained from a DMD (Dispersion Mode Delay) measurement in a manner known *per se*.

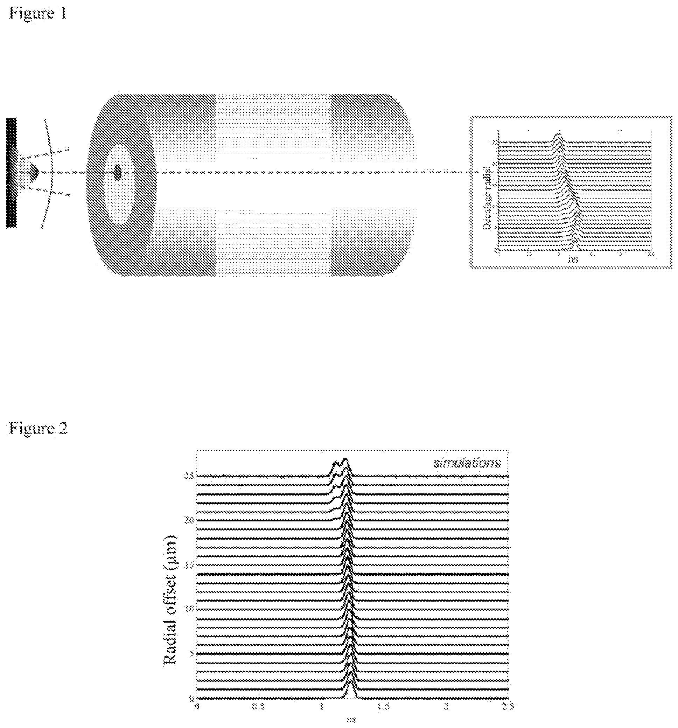

Figure 1 shows a schematic diagram of a DMD measurement according to the criteria of the FOTP-220 standard as published in its TIA SCFO-6.6 version of 22nd November 2002. Figure 1 shows a schematic representation of a part of an optical fiber, being an optical core surrounded by an optical cladding. A DMD graph is obtained by successively injecting into the multimode fibre a light pulse having a given wavelength $\lambda_0$ with a radial offset between each successive pulse, and by measuring the delay of each pulse after a given length of fibre L. The same light pulse is injected with different radial offsets with respect to the centre of the core of the multimode optical fibre. The injected light pulse with a certain radial offset is depicted in Figure 1 as a black dot on the optical core of the optical fiber. In order to characterize an optical fibre with a diameter of 50 $\mu$m, the FOTP-220 standard requires 24 individual measurements to be carried out, each for a different radial offset. From these measurements, it is possible to deduce the modal dispersion DMD, and the calculated effective modal bandwidth EMBc in a manner known *per se*.

The TIA-492AAAC-A standard specifies the performances required for Ethernet high-bandwidth transmission network applications over long distances for multimode **fibres with a diameter of 50 $\mu$m. The standard OM3 guarantees an EMB higher than or equal** to 2000 MHz.km @ 850 nm in order to obtain error-free transmissions for a data rate of 10 Gb/s (10 GbE) up to a distance of 300 m. The standard OM4 should guarantee an EMB higher than or equal to 4700 MHz.km @ 850 nm in order to obtain error-free transmissions for a data rate of 10 Gb/s (10 GbE) up to a distance of 550 m.

In a multimode fibre, the bandwidth results from the difference between the propagation times, or group delay times, of the several modes along the fibre. In particular for the same propagation medium (i.e. in a step index type multimode fibre), the different modes have group delay times which are different. This difference in group delay times results in a time lag between the pulses propagating along different radial directions of the fibre. For example, in Figure 1, a time lag is observed between the individual pulses, as can be seen in the graph on the right side of Figure 1, where each trace is an individual pulse and the time in nanoseconds is plotted on the x-axis for each pulse with the radial offset in micrometers on the y-axis. It is visible that there is a difference in the peaks meaning a time lag between the individual pulses. This time lag causes a broadening of the resulting light pulse. This broadening gives the risk of this pulse being superimposed onto a following pulse, and therefore the risk of reducing the data rate, hence the bandwidth, supported by the fibre. The bandwidth is therefore directly linked to the group delay time of the optical modes propagating in the multimode core of the fibre. In order to guarantee a broad bandwidth, it is necessary for the group delay times of all the modes to be identical, i.e. for the intermodal dispersion to be zero, or at least minimized, for a given wavelength. In order to reduce the intermodal dispersion in a multimode fibre, it has been proposed to produce graded-index fibres with an "alpha" core profile. Such a fibre has been used for a number of years and its characteristics have in particular been described in "Multimode theory of graded-core fibres" by D. Gloge et al., Bell system Technical Journal 1973, pp 1563-1578, and summarized in "Comprehensive theory of dispersion in graded-index optical fibers" by G. Yabre, Journal of Lightwave Technology, February 2000, Vol. 18, No. 2, pp 166-177.

A graded-index profile, or alpha-index profile - these two terms are equivalent - can be defined by a relationship between the index value n at a point as a function of the distance r from this point to the centre of the fibre according to the following equation:

$$n = n_1 \sqrt{1 - 2\Delta \left(\frac{r}{a}\right)^{\alpha}}$$

multimode core;
a, the radius of the multimode core; and

$$\Delta = \frac{\left(n_1^2 - n_0^2\right)}{2n_1^2}$$

where $n_0$ is the minimum index of the multimode core, generally corresponding to the index of the cladding (most often made of silica).

A multimode fibre with a graded index therefore has a core profile with a rotational symmetry such that along any radial direction of the fiber the value of the refractive index decreases continuously going from the centre of the fibre to its periphery. When a multimode light signal propagates in such a graded-index core the different optical modes experience a different propagation medium (due to the different refractive index), which affects their speed of propagation differently. By adjusting the value of the parameter $\alpha$, it is thus possible to obtain a group delay time which is virtually equal for all the modes and thus a reduced or even zero intermodal dispersion.

However, the refractive index profile of the multimode fibre actually produced comprises a graded-index central core surrounded by an outer cladding of constant index. Thus, the core of the multimode fibre never corresponds to a perfect alpha profile since the interface of the core (having an alpha profile) with the outer cladding (having a constant index) interrupts this alpha profile. This outer optical cladding accelerates the higher-order modes with respect to the lower-order modes. This phenomenon, known by the expression "cladding effect", can be seen in the graph of the DMD measurements presented in Figure 2. It is observed that the responses acquired for the highest radial positions (i.e. a high radial offset, e.g. above 20 micrometer) then exhibit multiple pulses. These pulses are due to the fact that the higher-order modes are accelerated when going through the cladding instead of through the core in which case these higher-order modes will arrive at a different time than the lower-order modes. The presence of such multiple pulses is reflected in a temporal broadening of the resulting response. As a result of this cladding effect the bandwidth is thus reduced.

In order to achieve the performances laid down by the TIA-492AAAC-A standard, it is necessary to limit the cladding effect in the fibre.

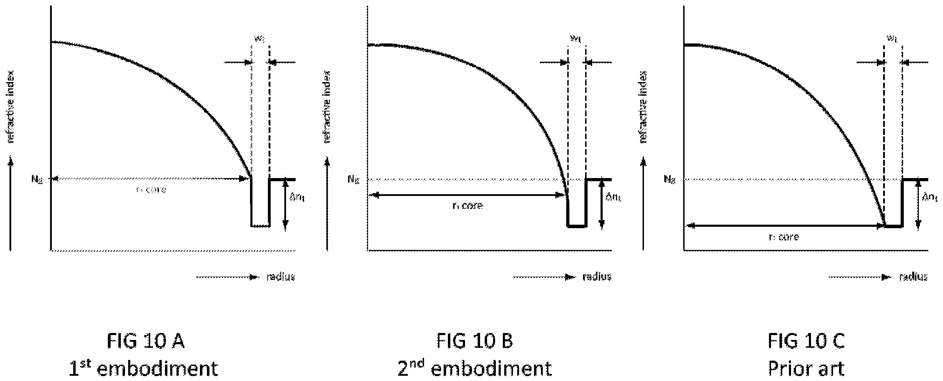

The document WO-A-2006/010798 describes a multi-mode optical fibre comprising a graded-index central core and a depressed trench located at the periphery of the central core. The graded-index profile of the central core is extended up to the bottom of the depressed trench (extended depressed gradient core) which is followed by a depression of constant refractive index. This type of prior art profile is shown in Figure 10C (explained below). The extended depressed gradient core is considered to be part of the core and the depression of constant refractive index is considered to be a depressed trench. The extension of the alpha- index core under the outer optical cladding and up to the bottom of the depressed trench in the form of the extended depressed gradient core can lead to an increase in the size of the core, which core then becomes incompatible with the OM3 and OM4 standards explained above. The extension of the core to negative refractive index values can also cause losses due to the propagation of leaky modes which are intrinsic to the geometry of a depressed trench.

WO-A-2009/054715, of the present inventors, discloses a multi-mode optical fiber comprising a central core having a graded-index profile, and a depressed cladding situated at the periphery of the central core. This graded-index profile of the core is extended up to the bottom of the depressed trench followed by a depression of constant index. This type of prior art profile is shown in Figure 10C (explained below). The extension of the alpha- index core under the outer optical cladding and up to the bottom of the depressed trench can lead to an increase in the size of the core. As a result of this, the optical fibre becomes incompatible with the OM3 and OM4 standards explained above. The extension of the core to negative refractive index values can also cause losses due to the propagation of leaky modes which are intrinsic to the geometry of a depressed trench.

The document US-A-4,339,174 describes a multimode fibre with a core having a graded-index profile and a reduced cladding effect. However the fibre has a diameter of 60.5 $\mu$m, and is not optimized for high-bandwidth applications.

The document US-A-4,184,744 discloses a multi-mode optical fiber comprising a central core having a graded-index profile and a depressed trench (called intermediate layer) situated at the periphery of the central core. The thickness of the depressed trench is between 0.1 and 1 times the radius of the core. For a core having a radius **of 50 $\mu$m the thickness of the intermediate layer is between 5 and 50 $\mu$m.**

The documents US-A-4,229,070 and US-A-4,230,396 describe multimode fibres having a graded-index core surrounded by a depressed trench in order to reduce the cladding effect. However, the fibres described have a diameter of 62.5 $\mu$m, and are not suitable for high-bandwidth applications.

US20080166094 describes a bend resistant multimode optical fibre comprising a graded-index core region and a cladding region surrounding and directly adjacent to the core region, the cladding region comprising a depressed-index annular portion having a depressed relative refractive index, relative to another portion of the cladding. This configuration does not allow to reduce the cladding effect sufficiently.

US-A1-5,115,486 decribes a multimode fibre for transmission of laser radiation with high output with substantial preservation of the mode structure. The fibre has a graded refractive index profile. The structure of the fiber consists of a core with a cladding around the core and a protective sheath around the cladding. The core diameter is between 200 and 800 $\mu$m and therefore not suitable for high bandwidth applications.

A need therefore exists for a multimode fibre having a refractive index profile comprising a graded-index core as well as a depressed trench, said fiber providing for a reduced cladding effect in order to allow a high bandwidth for high-bandwidth applications.

To this end, the invention proposes a multimode optical fibre according to claim 1.

According to an embodiment the fibre has a bandwidth with a radial offset at 25 $\mu$m (Radial Offset Bandwidth-ROB25) that is higher than 2000 MHz.km.

According to an embodiment the fibre has a bandwidth with a radial offset at 25 $\mu$m that is higher than 4000 MHz.km.

According to an embodiment the alpha-index profile of the central core has an alpha parameter having a value comprised between 1.9 and 2.1.

According to an embodiment the fibre has a numerical aperture (NA) that is equal to 0.200 $\pm$ 0.015.

According to an embodiment the refractive index difference of the depressed trench with respect to the outer optical cladding is constant over the entire width of the depressed trench.

According to an embodiment the fibre has an overfilled launch (OFL) bandwidth that is higher than 1500 MHz.km.

According to an embodiment the fibre has an overfilled launch (OFL) bandwidth that is higher than 3500 MHz.km.

According to an embodiment the fibre has an effective modal bandwidth (EMB) that is higher than 2000 MHz.km.

According to an embodiment the fibre has an effective modal bandwidth (EMB) that is higher than 4000 MHz-km.

The invention also relates to a multimode optical system according to claim 5.

According to an embodiment the multimode optical system has a data rate that is higher than or equal to 10 GbE (Gb/s) up to 100 meter (m).

According to an embodiment the multimode optical system has a data rate that is higher than or equal to 10 GbE (Gb/s) up to 300 meter (m).

Other characteristics and advantages of the present invention will become apparent on reading the following description of the embodiments of the invention, given by way of example and with reference to the attached drawings, which show:

Figure 1, already described, a diagram illustrating a DMD measurement;
Figure 2, already described, a graph of DMD measurements;
Figure 3, a graph representing the trend of a Radial Offset Bandwidth (ROB) parameter in megaherz kilometres as a function of the radial offset in micrometers;

Figure 4, a diagram showing a refractive index profile of a fibre not according to the invention, by a plot of the refractive index versus the radius of the fiber in micrometers;

Figures 5 to 7, graphs showing measurements of Radial Offset Bandwith with a radial offset of 23 micrometer (ROB23), 24 micrometer (ROB24), and 25 micrometer (ROB25) all in megaherz kilometres as a function of a parameter of the refractive index profile of the fibre, being the depth of the depressed trench;

Figure 8, a graph showing the values of an ROB25 parameter in megaherz kilometres on several fibres according to the prior art and on several fibres according to the invention;

Figure 9, two three dimensional (3D) graphs showing the responses of fibres according to the prior art and according to the invention for an injection of a light pulse with a radial offset of 25 $\mu$m (ROB25); fibres according to the prior art are represented in the left graph and fibres according to the invention in the right graph.

Figure 10, a diagram showing three refractive index profiles by a plot of the refractive index versus the radius in the fiber. Figure 10A shows a refractive index profile of a fiber not according to the invention. Figure 10B shows a refractive index profile of a fiber according to the invention. Figure 10C shows a refractive index profile of a fiber according to the prior art.

The fibre of the invention is a multimode fibre comprising a central core of radius $r_1$ with an alpha-index profile with respect to an outer optical cladding which also comprises a depressed trench situated at the periphery of the central core and having a width $w_t$ **and an index difference** $\Delta\mathbf{n_t}$ with respect to the outer optical cladding, such that the cladding effect is minimized. The combination of features of the present invention ensures a reduced cladding effect which makes it possible to achieve an effective modal bandwidth (EMB) greater than 2000 MHz.km, and even greater than 4700 Mhz.km. This is explained in more detail below.

In order to characterize the cladding effect an ROB (Radial Offset Bandwidth) is determined. This ROB constitutes a parameter extracted from DMD measurements. The DMD measurements are obtained for conditions of injection such that the spatial width of the input pulse is 5 $\mu$m +/- 0.5 $\mu$m @ 850 nm, and the distance between the probe fibre (single mode fibre serving to transmit the pulse to the multimode fibre) and the multimode fibre is less than 10 $\mu$m. The ROB at a radial offset X, denoted ROBX, is calculated by utilizing the information contained in the broadening and the deformation of the temporal profile of the output pulse obtained for an injection at the radial offset X, for a given wavelength $\lambda_0$ (for example 850 nm). A transfer function $H^{(X)}$ of obtained using a Fourier transform and a pulse deconvolution corresponds to each radial offset.

"Se(f) is the Fourier transform of the input pulse measured according to the TIA-455-220-A 5.1 Standard, Ss(f,X) is the Fourier transform of the output pulse corresponding to the X offset launch measured according to the TIA-455-220-A 5.1 Standard, f is the frequency.

For each offset launch X, a transfer function can be defined as follows:"

Let $S_e(f)$ is the Fourier transform of the input pulse measured according to the TIA-455-220-A 5.1 standard. $S_s(f, X)$ is the Fourier transform of the output pulse corresponding to the X offset launch measured according to the TIA-455-220-A 5.1 Standard, f is the frequency.

For each offset launch X, a transfer function can be defined as follows:

$$H^X(f) = \frac{S_S(f, X)}{S_e(f)}$$

ROBX is then the bandwidth at -3dB of the transfer function $H^X(f)$, corresponding to the response of the fibre for an injection at a radial offset of X in the DMD measurements.

In practice, the bandwidth is calculated for an attenuation of -1.5 dB and then extrapolated for an attenuation of -3 dB, assuming a Gaussian response, and multiplying by a factor $\sqrt{2}$ (as is also the case for the calculation of the effective bandwidth):

$$10 \cdot \log_{10}\left(H^{(X)}(f_X)\right) = -1.5 \qquad\qquad ROBX = \sqrt{2} \cdot f_X$$

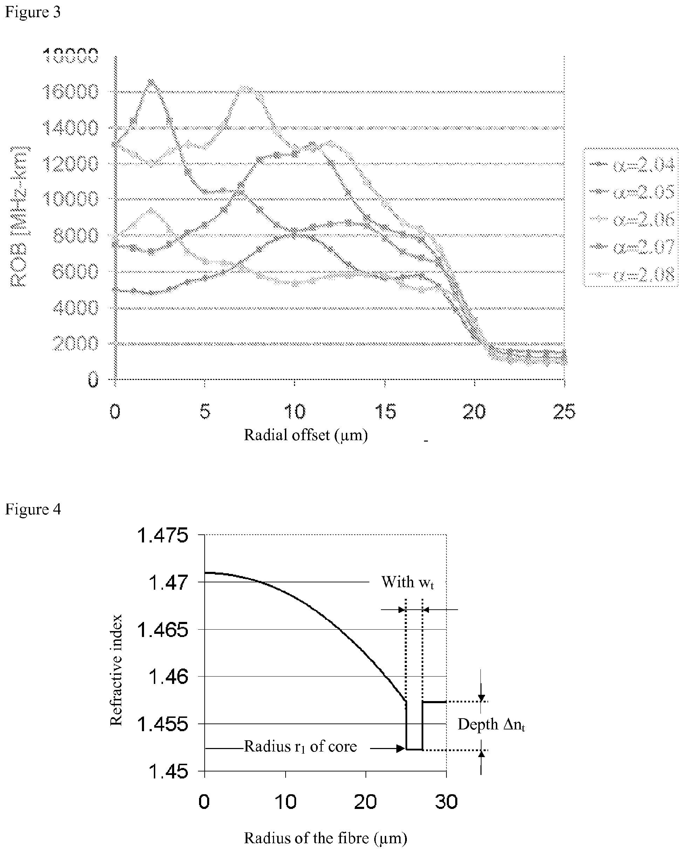

The graph in Figure 3 shows the ROB as a function of the Radial offset measured at a wavelength of 850 nm.

On the y-axis the ROB value is plotted against the radial offset in micrometers which is plotted on the x-axis. The ROB in Figure 3 is plotted for fibres with an alpha-index profile having different values of the alpha parameter (alpha varied between 2.04 and 2.08). It is observed that ROBX depends strongly on the value of the **parameter** $\alpha$ **for a radial off**set r comprised between 0 and approximately 18 $\mu$m. Meaning that in the window of radial offset of zero to 18 micrometers the traces for the different alpha values vary significantly Beyond a radial offset of 18 $\mu$m (i.e. beyond ROB18), the value of ROBX is less than 2000 MHz.km. After ROB18, the ROBX is then no longer very sensitive to the **parameter** $\alpha$ **(i.e. the traces for the different alpha values do not vary significantly), and the** ROBX essentially depends on the core-cladding interface. The radius of the central core of these fibers is 25 micrometers and approximately the in the outer 7 micrometers (i.e. between ROB18 and ROB25) the influence of the alpha profile is strongly reduced and the influence of the depressed trench and the cladding takes over.

A fibre not according to the invention has a refractive index profile, as illustrated in Figure 4 and schematically in Figure 10A, which makes it possible to obtain an ROB25 that is higher than 2000 MHz.km and even higher than 4000 MHz.km. The fibre according to the invention comprises an optical core and an outer optical cladding, the optical core comprising at the centre a central core having a graded-index or alpha-index profile. This central core has a maximum refractive index at the centre of the central core (where $r_1$ is zero) which refractive index continuously decreases going from the centre of the optical fibre (where $r_1$ is zero) to the periphery of the central core, where the refractive index difference with respect to the outer optical cladding is at it lowest point, which is zero in the case of the fibre not according to the invention shown in Figures 4 and 10A. Surrounding the central core is a depressed trench. By depressed trench in the description and claims of this application is meant the radial portion of the fibre having a refractive index that is less than the refractive index of the outer optical cladding $n_g$, i.e. having a negative refractive index. The depressed trench starts at a substantial vertical decrease in the refractive index.

In the fibre (shown in Figure 10B) of the present invention the alpha-index profile of the central core comprises a portion having a negative refractive index value, i.e. the gradex-index central core "extends" into the depressed trench. The depressed trench starts at a substantial vertical decrease in the refractive index and the portion of the gradex-index profile having a negative refractive index is considered to be part of the graded-index central core and not of the depressed trench.

Surrounding the depressed trench is the outer optical cladding. In an embodiment of the present invention the central core is directly surrounded by the depressed trench; and the depressed trench is directly surrounded by the outer optical cladding.

Figure 10C shows an embodiment of the prior art, for example as disclosed WO-A-2006/010798 and WO-A-2009/054715. This prior art graded-index profile of the core is extended up to the bottom of the depressed trench followed by a depression of constant index.

It should be noted that in an embodiment the depressed trench has a constant, negative refractive index value over the entire width $w_t$. It is however also possible that the depressed trench consists of two or more depressed sub-trenches each having an independent constant, negative refractive index value. This embodiment is not shown in the drawings.

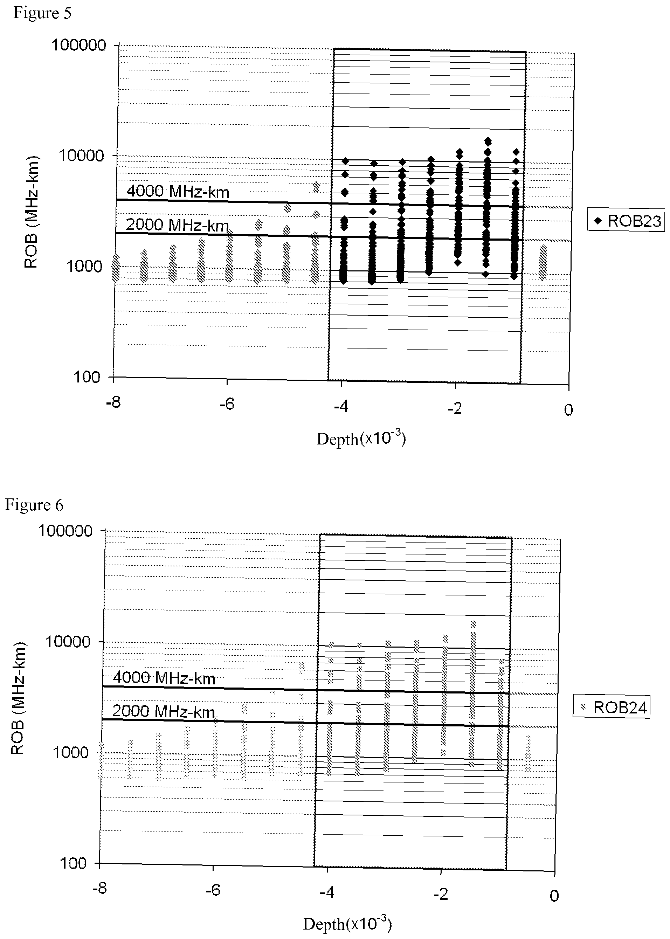

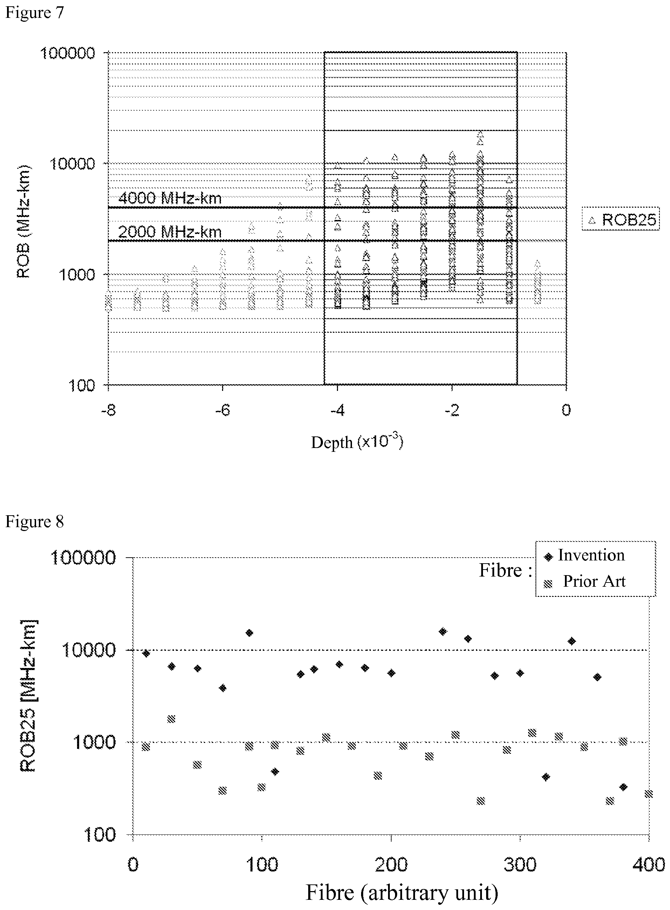

Typically, the depressed trench according to the present invention has a **depth** $\Delta n_t$, i.e. a negative refractive index difference with respect to the outer optical cladding. This **depth** $\Delta n_t$ is comprised between $-4\times10^{-3}$ and $-1\times10^{-3}$. The significance of this range of values will be better understood by referring to Figures 5, 6 and 7. Figures 5, 6, and 7 respectively show measurements of the Radial Offset Bandwidth at radial offsets of 23 micrometer (ROB23), 24 micrometer (ROB24) and 25 micrometer (ROB25). On the y-axis the ROB in megaherz kilometres is shown and on the x-**axis the depth** $\Delta n_t$ of the depressed trench is shown. Figure 5 shows the ROB23 values, Figure 6 shows the ROB24 values and Figure 7 shows the ROB25 values.

These ROB values are acquired on a fibre for which several parameters have been varied. The width $w_t$ **and the depth** $\Delta n_t$ of the depressed trench have been varied, respectively between 0.4 $\mu$m and 2 $\mu$m, and between $-8\times10^{-3}$ and $-0.5\times10^{-3}$. In addition, the refractive index difference between the end of the alpha-index profile of the central core and the outer optical cladding has been varied between $-0.5\times10^{-3}$ and 0. In the case of the fibre shown in Figure 10A this refractive index difference is zero and in the case of the fibre shown in Figure 10B this refractive index difference is below zero. Moreover, the numerical aperture has been varied between 0.2 and 0.22.

**It has been found that the depth** $\Delta n_t$ of the depressed trench is the main parameter which influences the ROB23, ROB24 and ROB25 values. The optimum values for **the depth** $\Delta n_t$ which make it possible to obtain ROB23, ROB24 and ROB25 values that are higher than 2000 MHz.km, whilst complying with the parameter values laid down by the ITU-T **G.651.1 standard. Thus, the range of values for the depth** $\Delta n_t$ of the depressed trench (i.e. 0.5 to 2 micrometer) according to the present invention ensure that the cladding effect is well compensated for by the depressed trench of the inventive fiber.

The depressed trench has a width $w_t$ comprised between 0.5 $\mu$m and 2 $\mu$m. The width $w_t$ is limited to a value of maximally 2 $\mu$m in order to retain a numerical aperture of the fibre that falls under the ITU-T G.651.1 standard.

The central core of the fibre has a radius $r_1$ **of 25 $\mu$m (i.e. a diameter of 50 $\mu$m). The graded**-index profile of the central core has a value for the alpha coefficient that is **typical of a multimode fibre:** $\alpha$ **is for example comprised between 1.9 and 2.1.** The refractive index difference of the central core with respect to the outer optical cladding has a maximum **value** $\Delta n_1$ (at the centre of the central core) that is comprised between $11 \times 10^{-3}$ and $16 \times 10^{-3}$.

The refractive index difference between the end of the graded-index profile of the central core and the outer optical cladding is comprised between $-0.5 \times 10^{-3}$ and 0. If the refractive index difference between the end of the graded-index profile of the central core and the outer optical cladding is zero, the graded-index profile of the central core does not extend below the index level of the outer optical cladding; this is not according to the invention.

In the invention the refractive index difference between the end of the graded-index profile of the central core and the outer optical cladding is negative, hence the graded-index profile of the central core is extended below the refractive index level of the outer optical cladding. However, the extension of the graded-index profile of the central core does not reach the bottom of the depressed trench as disclosed in Figure 10C for the prior art fibres. Thus the losses due to the propagation of intrinsic leaky modes are limited.

The outer optical cladding is typically made of natural silica for reasons of cost, but it can also be made of doped silica.

The advantages of the invention will be more evident by comparing fibres according to the prior art with fibres according to the invention. Fibres of the prior art and fibres according to the invention having the same optical parameters except for the depressed trench have been manufactured. The respective parameters of the depressed trench are shown in the following table:

|  | **Depth** $\Delta n_t \times 10^3$ | Width $w_t$ ($\mu$m) |
|---|---|---|
| Prior art | -0.8 | 8 |
| Invention | -3 | 8 |

Figure 8 shows values for the Radial Offset Bandwidth at a radial offset of 25 micrometers (ROB25) which are acquired on the fibres according to the prior art and on the fibres according to the invention, as disclosed in the Table above. It is observed that the majority of the fibres according to the invention have an ROB25 value that is higher than 2000 MHz.km, approximately 10,000 MHz.km, whilst the fibres according to the prior art have an ROB25 value of approximately 1000 MHz.km. The fibres according to the invention therefore have an ROB25 at least twice as high as that of the fibres of the prior art, which is desirable with respect to the required reduction of the cladding effect mentioned above.

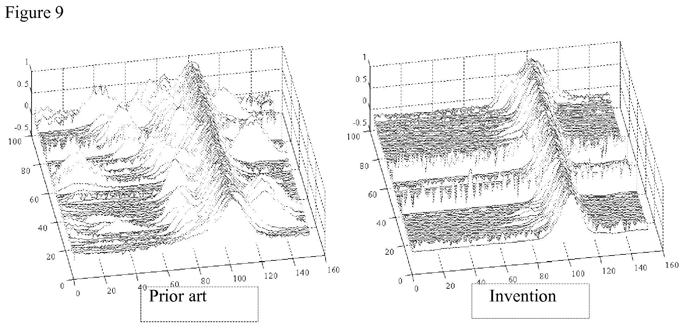

Figure 9 shows the response of the fibres described above in the Table according to the prior art and according to the present invention for an injection of a light pulse at the radial offset of 25 $\mu$m. The responses of the fibres according to the prior art and according to the invention are respectively shown in the graphs on the left side and right side in Figure 9. Each graph shows on the x-axis, the time scale, on the y-axis the numbers of each of the fibres, and on the side, the standardized amplitude of the output signal. The vast majority of the responses of the fibres according to the prior art show multiple pulses, whereas the majority of the responses of the fibres according to the invention show a single pulse. From this it can be concluded that the cladding effect is reduced in the fibres according to the present invention when compared with the fibres according to the prior art.

By observing Figure 9 in comparison with Figure 8, it emerges that the fibres according to the invention which have an ROB25 value that is higher than 2000 MHz.km, or even higher than 4000 MHZ.km, and exhibit a response for a radial offset of 25 $\mu$m, in the form of a single pulse (inventive fibers) instead of multiple pulses (prior art). As a result, the fibres according to the invention have a smaller cladding effect, which allows a broad bandwidth for high-bandwidth applications and hence one of the goals of the present invention has been reached.

The fibre according to the present invention is compatible with the ITU-T G.651.1 standard. **It has a central core diameter of 50 $\mu$m and a numerical aperture of** $0.2 \pm 0.015$. It is noted that the graded-index central core does not continue in the depressed trench. This ensures that the numerical aperture as laid down by the standard is retained and the cladding effect is attenuated.

According to an embodiment, the fibre according to the invention complies with the OM3 standard, namely an effective modal bandwidth EMB greater than 2000 MHz.km with a modal dispersion less than 0.3 ps/m, and an OFL bandwidth greater than 1500 MHz.km. According to another embodiment, the fibre according to the invention complies with the OM4 standard, namely an effective modal bandwidth EMB greater than 4700 MHz.km with a modal dispersion less than 0.14 ps/m, and an OFL bandwidth greater than 3500 Mhz.km.

The optical fibres may be manufactured by drawing them from final preforms in a manner known per se.

A final preform may be manufactured by providing a primary preform manufactured in a manner known per se with an outer overcladding layer (i.e. the so-called overcladding process). This outer overcladding layer consists of doped or undoped natural or synthetic silica glass. Several methods are available for providing the outer overcladding layer.

In a first method for example, the outer overcladding layer may be provided by depositing and vitrifying natural or synthetic silica particles on the outer periphery of the primary preform under the influence of heat. Such a process is known for example from US 5,522,007, US 5,194,714, US 6,269,663 and US 6,202,447.

In another example of a method a primary preform may be overcladded using a silica sleeve tube which may or may not be doped. This sleeve tube may then be collapsed onto the primary preform.

In yet a further alternative method an overcladding layer may be applied by means of an OVD (Outside Vapour Deposition) method wherein first a soot layer is deposited on the outer perihphery of a primary preform after which said soot layer is vitrified to form glass.

The primary preforms may be manufactured using known techniques comprising but not limited to outside vapour deposition techniques such as OVD and VAD (Vapour Axial Deposition) and inside deposition techniques such as MCVD (Modified Chemical Vapour Deposition), FCVD (Furnace Chemical Vapour Deposition) and PCVD (Plasma Chemical Vapour Deposition), wherein glass layers are deposited on the inner surface of a substrate tube, which is of doped or undoped silica glass.

In a preferred embodiment the primary preforms are manufactured with the PCVD process as this proces allows the shape of the gradient refractive index profile of the central core to be controlled very precisely.

The depressed trench may be deposited on the inner surface of a substrate tube as part of the chemical vapour deposition process. In a preferred embodiment however, the depressed trench is manufactured by either using a fluorine doped substrate tube as the starting point of the internal deposition process for deposition of the gradient refractive index central core or the depressed trench is manufactured by sleeving the gradient refractive index central core produced using an outside deposition process with a fluorine doped silica tube.

In yet a further embodiment, a primary preform is manufactured with an inside deposition process wherein a fluorine doped substrate tube is used, the resulting tube containing the deposited layers may be sleeved by one or more additional fluorine doped silica tubes so as to increase the thickness of the depressed trench, or to create a depressed trench having a varying refractive index over the width thereof. Although not required, the one or more additional sleeve tubes are preferably collapsed onto the primary preform before a further overcladding step is carried out. This process of sleeving and collapsing is sometimes referred to as jacketing and may be repeated if so required so as to build several glass layers on the outside of the primary preform.

The present invention is not limited to the embodiments described by way of example. The fibre according to the invention can be installed in numerous transmission systems having good compatibility with the other fibres of the system. The multimode optical fibre according to the invention can for example be used in an Ethernet optical system with an improved bandwidth.

**Claims**

1. A multi-mode optical fibre comprising an optical core surrounded by an outer optical cladding, the optical core comprising from the centre to the periphery:

   - a central core having a radius ($r_1$) and an alpha-index profile with respect to the outer optical cladding;
   - a depressed trench situated at the periphery of the central core having a width ($w_t$) **and a refractive index difference ($\Delta n_t$)** with respect to the outer optical cladding;

   in which

   - the diameter of the central core, being 2 times $r_1$, has a value of $50 \pm 3$ $\mu$m;
   - the width ($w_t$) of the depressed trench is comprised between 0.5 micrometer ($\mu$m) and 2 micrometer ($\mu$m);
   - **the refractive index difference ($\Delta n_t$)** of the depressed trench with respect to the outer optical cladding is comprised between $-4 \times 10^{-3}$ and $-1 \times 10^{-3}$;

   wherein the central core has a maximum value of the refractive index difference ($\Delta n_1$) with respect to the outer optical cladding that is comprised between $11 * 10^{-3}$ and $16 * 10^{-3}$ , **characterized in that**:

   - the alpha-index profile of the central core comprises a portion having a negative refractive index value, wherein the graded-index central core extends into the depressed trench and the extension of the graded-index profile of the central core does not reach the bottom of the depressed trench;
   - the refractive index difference between the end of the alpha-index profile of the central core and the outer optical cladding is comprised between $-0.5 \times 10^{-3}$ and 0.

**2.** The fibre according to claim 1, in which the alpha-index profile of the central core has an alpha parameter ($\alpha$) having a value comprised between 1.9 and 2.1.

**3.** The fibre according to one of the preceding claims, having a numerical aperture (NA) that is equal to $0.200 \pm 0.015$.

**4.** The fibre according to one of the preceding claims in which the refractive **index difference ($\Delta n_t$)** of the depressed trench with respect to the outer optical cladding is constant over the entire width ($w_t$) of the depressed trench.

**5.** Multimode optical system comprising at least one portion of multimode optical fibre according to any one of claims 1 to 4.


**Patentansprüche**

**1.** Multimode-Lichtwellenleiter, der einen optischen Kern umfasst, der von einer äußeren optischen Ummantelung umgeben ist, wobei der optische Kern von dem Zentrum zu der Peripherie Folgendes umfasst:

- einen zentralen Kern mit einem Radius ($r_1$) und einem alpha-Indexprofil in Bezug auf die äußere optische Ummantelung;
- einen abgesenkten Graben, der sich an der Peripherie des zentralen Kerns befindet, mit einer Breite ($w_t$) und einer Brechungsindexdifferenz ($\Delta nt$) in Bezug auf die äußere optische Ummantelung;

in dem

- der Durchmesser des zentralen Kerns, der das 2-fache von $r_1$ ist, einen Wert von $50 \pm 3\ \mu m$ hat;
- die Breite ($w_t$) des abgesenkten Grabens zwischen 0,5 Mikrometern ($\mu m$) und 2 Mikrometern ($\mu m$) liegt;
- die Brechungsindexdifferenz ($\Delta nt$) des abgesenkten Grabens in Bezug auf die äußere optische Ummantelung zwischen $-4\times10^{-3}$ und $-1\times10^{-3}$ liegt;

wobei der zentrale Kern einen Maximalwert der Brechungsindexdifferenz ($\Delta n_1$) in Bezug auf die äußere optische Ummantelung hat, der zwischen $11*10^{-3}$ und $16*10^{-3}$ liegt, **dadurch gekennzeichnet, dass**:

- das alpha-Indexprofil des zentralen Kerns einen Abschnitt mit einem negativen Brechungsindexwert umfasst, wobei sich der zentrale Kern mit abgestuftem Index in den abgesenkten Graben hinein erstreckt und die Ausdehnung des abgestuften Indexprofils des zentralen Kerns den Boden des abgesenkten Grabens nicht erreicht;
- die Brechungsindexdifferenz zwischen dem Ende des alpha-Indexprofils des zentralen Kerns und der äußeren optischen Ummantelung zwischen $-0,5\times10^{-3}$ und 0 liegt.

**2.** Faser nach Anspruch 1, wobei das alpha-Indexprofil des zentralen Kerns einen alpha-Parameter ($\alpha$) mit einem Wert hat, der zwischen 1,9 und 2,1 liegt.

**3.** Faser nach einem der vorhergehenden Ansprüche mit einer numerischen Apertur (NA) , die gleich $0,200 \pm 0,015$ ist.

**4.** Faser nach einem der vorhergehenden Ansprüche, wobei die Brechungsindexdifferenz ($\Delta n_t$) des abgesenkten Grabens in Bezug auf die äußere optische Ummantelung über die gesamte Breite ($w_t$) des abgesenkten Grabens konstant ist.

**5.** Optisches Multimode-System, das mindestens einen Abschnitt des Multimode-Lichtwellenleiters gemäß einem der Ansprüche 1 bis 4 umfasst.


**Revendications**

**1.** Fibre optique multimode comprenant un cœur optique entouré d'une gaine optique extérieure, le cœur optique comprenant à partir du centre vers la périphérie :

- un cœur central ayant un rayon ($r_1$) et un profil d'indice alpha par rapport à la gaine optique extérieure ;
- une tranchée enterrée située à la périphérie du cœur central ayant une largeur ($w_t$) et une différence d'indice

de réfraction (∆nt) par rapport à la gaine optique extérieure ;

dans laquelle

- le diamètre du cœur central, qui est 2 fois $r_1$, a une valeur de $50\pm3$ $\mu$m ;
- la largeur ($w_t$) de la tranchée enterrée est comprise entre 0,5 micromètre ($\mu$m) et 2 micromètres ($\mu$m);
- la différence d'indice de réfraction (∆nt) de la tranchée enterrée par rapport à la gaine optique extérieure est comprise entre $-4\times10^{-3}$ et $-1\times10^{-3}$ ; dans laquelle le cœur central a une valeur maximale de la différence d'indice de réfraction ($\Delta n_1$) par rapport à la gaine optique extérieure qui est comprise entre $11 * 10^{-3}$ et $16 * 10^{-3}$,

**caractérisée en ce que** :

- le profil d'indice alpha du cœur central comprend une partie ayant une valeur d'indice de réfraction négative, où le cœur central à gradient d'indice s'étend dans la tranchée enterrée et l'extension du profil à gradient d'indice du cœur central n'atteint pas le fond de la tranchée enterrée ;
- la différence d'indice de réfraction entre l'extrémité du profil d'indice alpha du cœur central et la gaine optique extérieure est comprise entre $-0,5\times10^{-3}$ et 0.

2. Fibre selon la revendication 1, dans laquelle le profil d'indice alpha du cœur central a un paramètre alpha ($\alpha$) ayant une valeur comprise entre 1,9 et 2,1.

3. Fibre selon l'une des revendications précédentes, ayant une ouverture numérique (NA) qui est égale à $0,200 \pm 0,015$.

4. Fibre selon l'une des revendications précédentes dans laquelle la différence d'indice de réfraction (∆nt) de la tranchée enterrée par rapport à la gaine optique extérieure est constante sur toute la largeur ($w_t$) de la tranchée enterrée.

5. Système optique multimode comprenant au moins une partie de fibre optique multimode selon l'une quelconque des revendications 1 à 4.

Figure 1

Figure 2

Figure 3

Figure 4

Figure 5

Figure 6

Figure 7

Figure 8

Figure 9

Prior art

Invention

FIG 10 C
Prior art

FIG 10 B
2$^{nd}$ embodiment

FIG 10 A
1$^{st}$ embodiment

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006010798 A
- WO 2009054715 A
- US 4339174 A
- US 4184744 A
- US 4229070 A
- US 4230396 A
- US 20080166094 A
- US 5115486 A1
- US 5522007 A
- US 5194714 A
- US 6269663 B
- US 6202447 B

**Non-patent literature cited in the description**

- *TIA SCFO-6.6 version,* 22 November 2002
- **D. GLOGE et al.** Multimode theory of graded-core fibres. *Bell system Technical Journal,* 1973, 1563-1578
- **G. YABRE.** Comprehensive theory of dispersion in graded-index optical fibers. *Journal of Lightwave Technology,* February 2000, vol. 18 (2), 166-177